# EUROPÄISCHE PATENTSCHRIFT

(11) **EP 2 434 183 B1**
(45) Veröffentlichungstag und Bekanntmachung des Hinweises auf die Patenterteilung: **08.05.2013**
(21) Anmeldenummer: 11178843.6
(22) Anmeldetag: 25.08.2011
(51) Int. Cl.: F16H 57/04, B01D 35/06

(54) **Vorrichtung zur Filterung von Schmierstoffen in einem Getriebe**
Method for filtering lubricants in a transmission
Dispositif de filtration de lubrifiants dans une transmission

(30) Priorität: 28.09.2010 DE 102010041559
(43) Veröffentlichungstag der Anmeldung: 28.03.2012
(73) Patentinhaber: Siemens Aktiengesellschaft, 80333 München (DE)
(72) Erfinder: Brasseur, Michaela, 52072 Aachen (DE); Wohlleb, Matthias, 52146 Würselen (DE)

(56) Entgegenhaltungen:
- WO-A1-03/078069
- JP-A- 2005 083 491
- US-A- 4 995 971
- US-A1- 2009 107 769

## Beschreibung

Die Erfindung betrifft eine Vorrichtung zur Filterung von Schmierstoffen in einem Getriebe.

Verschleißerscheinungen an Maschinenbauteilen führen zu Abrieb. Dabei entstehende feste Abriebpartikel erzeugen weitere mechanische Abnutzung und führen wiederum zu Abrieb. Da Abriebpartikel die Hauptursache für den vorzeitigen Ausfall von Maschinenteilen bilden, ist es erforderlich, sie vom Schmierstoff zu entfernen, um eine möglichst lange Maschinenlaufzeit erzielen zu können.

Zur Abscheidung von Partikeln aus Schmierstoff werden üblicherweise Filtersysteme eingesetzt. Es ist bekannt Filterelemente mit feinen Zellulosefasern, beispielsweise mit einem Durchmesser von 3µm, zu verwenden. Die Filtersysteme sind oft außerhalb des Hauptstroms angeordnet.

Diese bekannten Feinfiltersysteme haben jedoch den Nachteil, dass größere Partikel, z.B. größere Metallteilchen oder nichtmagnetische Teilchenagglomerate, das Filter schnell zusetzen. Daher muss das Filter entsprechend häufig erneuert werden, um eine optimale Filterung garantieren zu können.

Der im Schmierstoff vorhandene Abrieb besteht vornehmlich aus Metallpartikeln unterschiedlichster Größe. Dieser metallische Abrieb kann dank seiner Materialeigenschaften mit Hilfe eines Magnetabscheiders ausfiltert werden.

Dazu sind Feinfiltersysteme mit integrierten Magnetabscheidern zum Abscheiden von Metallpartikeln aus Schmierstoff bekannt. Solche Filtersysteme finden auch in Windkraftanlagen zur Filterung des Getriebeschmierstoffs Anwendung.

Nachteilig hieran ist, dass das gesamte Filterelement getauscht werden muss, wenn der Feinfilter gesättigt ist. Die Wartung dieser Filtersysteme ist aufwändig und kostenintensiv. Dies gilt insbesondere für Filtersysteme in Meeres-Windkraftanlagen, die schwer zugänglich sind.

Zudem entstehen bei einem Filterwechsel neben den reinen Material- und Personalkosten noch weitere Kosten durch den Betriebsausfall der Windkraftanlage.

Aus Dokument US4995971 A ist bekannt, einen Magnetfilter auf der Oberfläche einer Getriebeölwanne anzuordnen, um eisenhaltige Verunreinigungen aus Getriebeöl zu entfernen. Der magnetische Filter ist als ringförmiger Magnet ausgebildet.

Der Erfindung liegt die Aufgabe zugrunde, eine verbesserte Vorrichtung zum Filtern von Getriebeschmierstoff vorzuschlagen, die große Wartungsintervalle und einen einfachen und schnellen Wechsel von Filterelementen ermöglicht.

Erfindungsgemäß wird diese Aufgabe gelöst durch die Vorrichtung gemäß Anspruch 1. Vorteilhafte Weiterbildungen der Erfindung sind in den Unteransprüchen definiert. Eine Windturbine mit einer solchen Vorricthung ist im Ansprucg 14 beansprucht

Die Erfindung betrifft eine Vorrichtung zur Filterung von Schmierstoffen in einem Getriebe, bei dem bewegliche Getriebeteile in einem Getriebegehäuse angeordnet sind. Die Getriebeteile werden zumindest teilweise vom Schmierstoff benetzt.

Die Vorrichtung umfasst ein an sich bekanntes Feinfilterelement, das derart im Getriebegehäuse und im Fluss des Schmierstoffs angeordnet ist, dass Verunreinigungen des Schmierstoffs in Abhängigkeit von ihrer Größe ausgefiltert werden.

Darüber hinaus umfasst die Vorrichtung ein Magnetfilterelement, das räumlich getrennt vom Feinfilterelement angeordnet ist.

Das Magnetfilterelement ist derart im Getriebegehäuse und im Fluss des Schmierstoffs angeordnet, dass magnetisierbare Verunreinigungen des Schmierstoffs mit Hilfe eines Magnetfeldes des Magnetfilterelements ausgefiltert werden.

Vorteilhafterweise ist das Magnetfilterelement so ausgebildet, dass es als Primär- oder Vorfilter verwendet werden kann. So können die zuvor beschriebenen Nachteile bekannter Filtervorrichtungen überwunden werden.

Der größte Teil der im Schmierstoff befindlichen Metallpartikel bleibt bereits am Magnetfilterelement haften und gelangt nicht zum Feinfilter mit seinen Filterelementen auf Basis von Zellulosefasern.

Zudem bleibt nichtmagnetischer Abrieb an den Oberflächen der Metallpartikel haften, so dass sich Agglomerate aus metallischen und nichtmetallischen Partikeln bilden, die ebenfalls mittels des Magnetfilterelements aus dem Schmierstoff gefiltert werden.

Die erfindungsgemäße Vorrichtung hat weiterhin den Vorteil, dass sie unabhängig von einem in Richtung des Schmierstoffflusses nachgeschalteten Fein- bzw. Hauptfilter getauscht werden kann.

Eine Ausführungsform der Erfindung umfasst zwei Öffnungen im Getriebegehäuse. Das hat den Vorteil, dass gleichzeitig oder zeitnah nacheinander ein gesättigtes Magnetfilterelement aus dem Getriebe herausgeschoben und ein Austauschfilterelement in das Getriebe hineingeschoben werden kann. Dieser Filterwechsel erfolgt bei vergleichsweise kurzer Standzeit.

Ausführungsformen der vorliegenden Erfindung werden in exemplarischer Weise mit Bezug auf die angehängten Zeichnungen beschrieben, in denen:
FIG 1: eine erste Querschnittsdarstellung einer Ausführungsform der erfindungsgemäßen Vorrichtung als Querschnitt entlang der Querachse des Magnetfilterelements und
FIG 2: eine zweite Querschnittsdarstellung einer Ausführungsform der erfindungsgemäßen Vorrichtung als Querschnitt entlang der Längsachse des Magnetfilterelements zeigt.

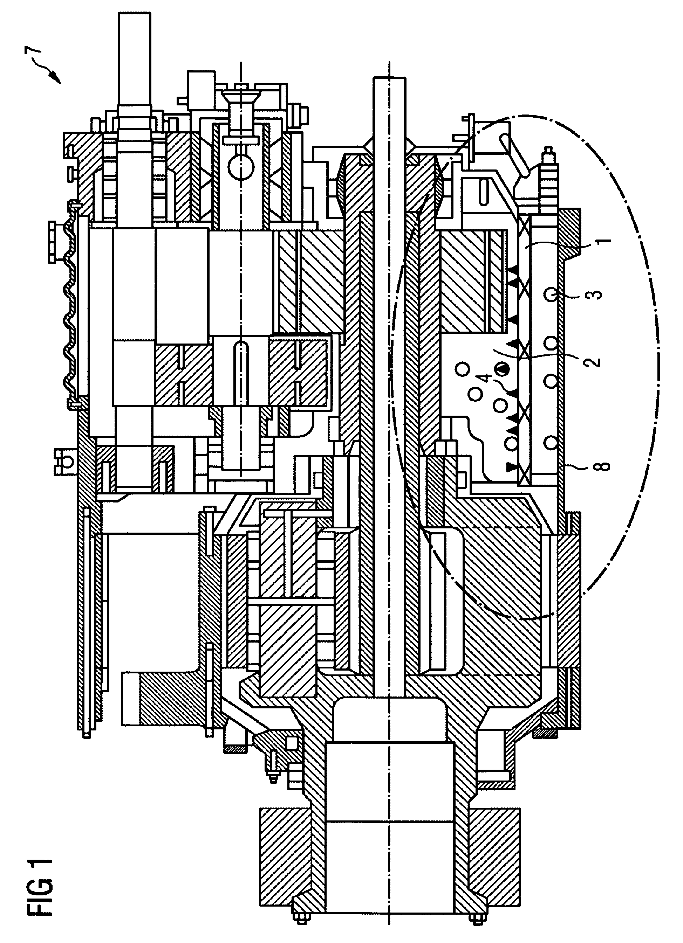

Wie in FIG 1 gezeigt, umfasst die erfindungsgemäße Vorrichtung 7 einen Magnetabscheider 1, der als Gitterplatte konstruiert ist. Er hat somit, unter Vernachlässigung seiner geringen Höhe, im Wesentlichen die Form einer zweidimensionalen Gitterfläche. Die Maschengröße des Gitternetzes der Gitterfläche liegt beispielsweise zwischen 10µm und 5mm.

In einer Ausführungsform der Erfindung hat die Gitterfläche die Form eines Rechtecks und wird von zwei Längsseiten und zwei Querseiten 5 begrenzt. Andere Formen sind denkbar, wobei der Magnetabscheider 1, unabhängig von der genauen Flächenform, eine Längsachse und eine hierzu vergleichsweise kürzere Querachse aufweist.

Der Magnetabscheider 1 ist, wie in FIG 1 dargestellt, in der Ölwanne 2 des Getriebegehäuses 8 angeordnet, zum Beispiel über dem Ölbad der Trockensumpfschmierung, um sicherzustellen, dass das gesamte Getriebeöl 3 durch den Magnetabscheider 1 hindurchfließt.

In einer weiteren Ausführungsform der Erfindung ist das Getriebe 7 Teil einer Windturbine.

Der Magnetabscheider 1 ist unterhalb der beweglichen Getriebeteile im Getriebegehäuse 8 angeordnet. Die Anordnung erfolgt so, dass die Längsachse der Gitterfläche bzw. Gitterplatte quer zur Längsachse der Welle, z.B. der Stirnradwelle, ausgerichtet ist.

Der Abstand zwischen den beiden Querseiten 5 ist dabei so gewählt, dass sich der Magnetabscheider 1 bis zum Getriebegehäuse 8 hin erstreckt.

Alternativ dazu kann bei anderen Größenverhältnissen des Getriebes 7, der erfindungsgemäße Magnetabscheider 1 auch so ausgerichtet sein, dass die Längsachse der Gitterfläche parallel zur Welle, z.B. Stirnradwelle, ausgerichtet ist. In diesem Fall ist der Abstand zwischen den beiden Längsseiten so gewählt, dass sich der Magnetabscheider bis zum Getriebegehäuse 8 hin erstreckt.

Das Getriebegehäuse 8 selbst weist Öffnungen 6 auf. Vorzugsweise sind zwei Öffnungen 6 vorgesehen. Es wären ebenso mehr als zwei Öffnungen 6 des Getriebegehäuses 8 denkbar, um zu ermöglichen, dass das Magnetfilterelement 1 von verschiedenen Seiten des Getriebes zugänglich ist.

In der, in FIG 1, gezeigten Ausführungsform sind die Öffnungen 6 entsprechend der Länge der Querseiten 5 und der Höhe des Magnetabscheiders 1 dimensioniert. Sie sind derart ausgebildet, dass der Magnetabscheider 1 durch die Öffnungen 6 in das Getriebegehäuse 8 hinein- und/oder aus dem Getriebegehäuse 8 herausgezogen und/oder herausgeschoben werden kann.

Die Öffnungen 6 sind in den Bereichen des Getriebegehäuses 8 angeordnet, die den Querseiten 5 des Magnetabscheiders 1 gegenüberliegen.

In einer weiteren, nicht dargestellten, Ausführungsform der Erfindung weist das Getriebegehäuse nur eine einzige Öffnung auf. Der Magnetabscheider wird durch diese Öffnung sowohl in das Getriebegehäuse hinein als auch aus dem Getriebegehäuse heraus bewegt.

Um einen ungewollten Ölverlust zu vermeiden, wird die Öffnung 6 mit einer Dichtung versehen. In einer Ausführungsform der Erfindung ist die Dichtung am Gehäuse fest aber lösbar angeordnet, zum Beispiel eingesteckt.

In einer anderen Ausführungsform der Erfindung ist die Dichtung am Magnetabscheider 1 befestigt, z.B. geklebt, und wird durch Bewegen des Magnetabscheiders 1 aus der Öffnung heraus bewegt.

Im Servicefall genügt es, eine Dichtung oder mehrere der Dichtungen zu entfernen und den gesättigten Magnetabscheider 1 durch eine Öffnung 6 herauszuziehen oder herauszuschieben. Der Magnetabscheider 1 kann anschließend von einem Servicetechniker an Ort und Stelle gereinigt und wieder eingesetzt werden.

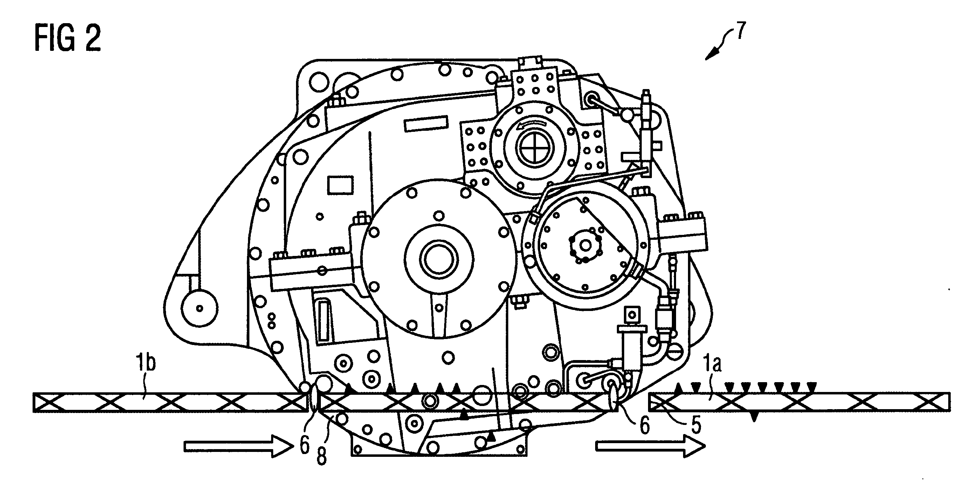

Wie in FIG 2 gezeigt, kann ein gesättigter Magnetabscheider 1a auch durch einen Austauschabscheider 1b ersetzt werden.

Im Falle eines Windturbinengetriebes wird so die Stillstandszeit der Windturbine weiter verkürzt. Der gesättigte Magnetabscheider 1a wird bei dieser Alternative zu einem späteren Zeitpunkt gereinigt und als Austauschfilter für eine andere Windturbine eingesetzt.

Darüber hinaus ist es möglich einen gesättigten Magnetabscheider 1a durch einen Austauschabscheider 1b zu ersetzen. Dazu können gleichzeitig oder auch zeitversetzt der gesättigte Magnetabscheider 1a zu einer Öffnung 6 aus dem Getriebe herausgeschoben und ein Austauschabscheider 1b zu einer anderen Öffnung 6 in das Getriebe hineingeschoben werden.

In einer weiteren Ausführungsform der Erfindung sind eine Steuereinheit und mindestens ein Motor mit den Magnetabscheidern (1a,1b) verbunden, so dass das Ersetzen des Magnetabscheiders 1a durch den Magnetabscheider 1b automatisiert im laufenden Betrieb der Maschine, z.B. einer Windturbine, erfolgen kann.

Die Reinigung oder der Tausch des Magnetabscheiders 1a, 1b sind unabhängig vom Tausch des Hauptfilters möglich. Bei Verwendung des erfindungsgemäßen Filtersystems reduzieren sich somit die Wartungskosten der Windturbine. Zudem trägt der wiederverwendbare Magnetabscheider 1, 1a, 1b zu einer Verringerung der Umweltbelastungen bei.

## Patentansprüche

1. Getriebe (7) mit einer Vorrichtung zur Filterung von Schmierstoffen,
- bei dem bewegliche Getriebeteile in einem Getriebegehäuse (8) angeordnet sind, wobei diese zumindest teilweise vom Schmierstoff benetzt werden,
- wobei die Vorrichtung ein Feinfilterelement umfasst, das derart im Getriebegehäuse (8) und im Schmierstofffluss angeordnet ist, dass Verunreinigungen des Schmierstoffs in Abhängigkeit von ihrer Größe ausgefiltert werden, und
- wobei die Vorrichtung ein zusätzliches Magnetfilterelement (1, 1a, 1b) umfasst, das räumlich getrennt vom Feinfilterelement derart im Getriebegehäuse (8) und im Schmierstofffluss angeordnet ist, dass magnetisierbare Verunreinigungen des Schmierstoffs mit Hilfe eines Magnetfeldes des Magnetfilterelements (1, 1a, 1b) ausgefiltert werden,
**dadurch gekennzeichnet,**
**dass** das Magnetfilterelement (1, 1a, 1b) ein magnetisierbares Gitter aufweist und in einer Ölwanne (2) des Getriebegehäuses (8) derart angeordnet ist, dass der gesamte Schmierstoff durch das Magnetfilterelement hindurchfließt.

2. Vorrichtung nach Anspruch 1, **dadurch gekennzeichnet,**
**dass** das Gitter als ebene Fläche ausgebildet ist.

3. Vorrichtung nach einem der Ansprüche 1 bis 2, **dadurch gekennzeichnet,**
**dass** das Magnetfilterelement (1, 1a, 1b) in einem Schmierstoffsumpf des Getriebes angeordnet ist.

4. Vorrichtung nach einem der Ansprüche 1 bis 3, **dadurch gekennzeichnet,**
**dass** das Magnetfilterelement (1, 1a, 1b) im Schmierstoffsumpf des Getriebes beweglich gelagert ist.

5. Vorrichtung nach einem der Ansprüche 1 bis 4, **dadurch gekennzeichnet,**
**dass** das Getriebegehäuse (8) eine Öffnung (6) umfasst, die derart ausgebildet ist, dass das Magnetfilterelement (1, 1a, 1b) durch die Öffnung (6) in das Getriebegehäuse (8) hinein und/oder aus dem Getriebegehäuse (8) heraus geführt werden kann.

6. Vorrichtung nach einem der Ansprüche 1 bis 5, **dadurch gekennzeichnet,**
**dass** die Öffnung (6) eine Dichtung umfasst, um ein Austreten des Schmierstoffs aus der Öffnung (6) zu verhindern.

7. Vorrichtung nach einem der Ansprüche 1 bis 6, **dadurch gekennzeichnet,**
**dass** das Getriebegehäuse (8) zwei Öffnungen (6) umfasst.

8. Vorrichtung nach einem der Ansprüche 1 bis 7, **dadurch gekennzeichnet,**
**dass** das Magnetfilterelement (1, 1a, 1b) im Schmierstofffluss vor dem Feinfilterelement angeordnet ist und unabhängig von diesem austauschbar ist.

9. Vorrichtung nach einem der Ansprüche 1 bis 8, **dadurch gekennzeichnet,**
**dass** das Magnetfilterelement (1, 1a, 1b) im Betrieb des Getriebes (7) austauschbar ist.

10. Vorrichtung nach einem der Ansprüche 1 bis 9, **dadurch gekennzeichnet,**
**dass** das Magnetfilterelement (1, 1a, 1b) derart ausgestaltet ist, dass an den metallischen Verunreinigungen des Schmierstoffs anhaftende nichtmetallische Verunreinigungen mit ausgefiltert werden.

11. Vorrichtung nach einem der Ansprüche 1 bis 10, **dadurch gekennzeichnet,**
**dass** das Getriebe (7) ein Windturbinengetriebe ist.

12. Vorrichtung nach einem der Ansprüche 1 bis 11, **dadurch gekennzeichnet,**
**dass** das Magnetfilterelement (1, 1a, 1b) unterhalb der beweglichen Getriebeteile angeordnet ist.

13. Vorrichtung nach einem der Ansprüche 1 bis 12, **dadurch gekennzeichnet,**
**dass** das Magnetfilterelement (1, 1a, 1b) eine Längsachse umfasst (1, 1a, 1b), dass die beweglichen Getriebeteile eine Welle mit einer Längsachse umfassen, und
**dass** die Längsachse des Magnetfilterelements (1, 1a, 1b) quer zur Längsachse der Welle angeordnet ist.

14. Windturbine mit einer Vorrichtung nach einem der Ansprüche 1 bis 13.

## Claims

1. Transmission (7) having a device for filtering lubricants,
- wherein moving transmission parts are arranged in a transmission casing (8), said parts being at least partially wetted by the lubricant,
- wherein the device has a fine filter element which is arranged in the transmission casing (8) and in the lubricant flow in such a way that contaminants in the lubricant are filtered out as a function of their size, and
- wherein the device has an additional magnetic filter element (1, 1a, 1b) which is arranged spatially separated from the fine filter element in the transmission casing (8) and in the lubricant flow in such a way that magnetisable contaminants in the lubricant are filtered out with the aid of a magnetic field of the magnetic filter element (1, 1a, 1b),
**characterised in that**
the magnetic filter element (1, 1a, 1b) has a magnetisable grid and is arranged in an oil pan (2) of the transmission casing (8) such that the entire lubricant flows through the magnetic filter element.

2. Device according to claim 1, **characterised in that** the grid is embodied as a flat surface.

3. Device according to one of claims 1 to 2, **characterised in that**
the magnetic filter element (1, 1a, 1b) is arranged in a lubricant sump of the transmission.

4. Device according to one of claims 1 to 3, **characterised in that**
the magnetic filter element (1, 1a, 1b) is movably mounted in the lubricant sump of the transmission.

5. Device according to one of claims 1 to 4, **characterised in that**
the transmission casing (8) contains an opening (6) which is embodied in such a way that the magnetic filter element (1, 1a, 1b) can be introduced into the transmission casing (8) and/or extracted from the transmission casing (8) through the opening (6).

6. Device according to one of claims 1 to 5, **characterised in that**
the opening (6) has a seal in order to prevent the lubricant from escaping from the opening (6).

7. Device according to one of claims 1 to 6, **characterised in that**
the transmission casing (8) contains two openings (6).

8. Device according to one of claims 1 to 7, **characterised in that**
the magnetic filter element (1, 1a, 1b) is arranged in the lubricant flow upstream of the fine filter element and can be replaced independently of the latter.

9. Device according to one of claims 1 to 8, **characterised in that**
the magnetic filter element (1, 1a, 1b) can be replaced while the transmission (7) is in operation.

10. Device according to one of claims 1 to 9, **characterised in that**
the magnetic filter element (1, 1a, 1b) is embodied in such a way that nonmetallic contaminants adhering to the metallic contaminants in the lubricant are also filtered out with same.

11. Device according to one of claims 1 to 10, **characterised in that**
the transmission (7) is a wind turbine transmission.

12. Device according to one of claims 1 to 11, **characterised in that**
the magnetic filter element (1, 1a, 1b) is arranged below the moving transmission parts.

13. Device according to one of claims 1 to 12, **characterised in that**
the magnetic filter element (1, 1a, 1b) has a longitudinal axis (1, 1a, 1b), **in that** the moving transmission parts include a shaft with a longitudinal axis, and
**in that** the longitudinal axis of the magnetic filter element (1, 1a, 1b) is arranged transversely with respect to the longitudinal axis of the shaft.

14. Wind turbine having a device according to one of claims 1 to 13.

## Revendications

1. Transmission (7) dotée d'un dispositif de filtration de lubrifiants,
- dans laquelle les éléments de transmission mobiles sont disposés dans un carter de transmission (8), ces éléments étant humectés au moins partiellement par le lubrifiant,
- dans laquelle ledit dispositif comprend un élément de filtration fine lequel est disposé dans le carter de transmission (8) et dans le flux de lubrifiant de telle sorte que les impuretés du lubrifiant sont éliminées par filtration en fonction de leur taille, et
- dans laquelle ledit dispositif comprend en complément un élément de filtration magnétique (1, 1a, 1b), lequel est séparé dans l'espace de l'élément de filtration fine et disposé dans le carter de transmission (8) et dans le flux de lubrifiant de telle sorte que les impuretés magnétisables du lubrifiant sont éliminées par filtration à l'aide d'un champ magnétique de l'élément de filtration magnétique (1, 1a, 1b),
**caractérisée en ce que**
l'élément de filtration magnétique (1, 1a, 1b) présente une grille magnétisable et est disposé dans une cuvette à huile (2) du carter de transmission (8) de telle sorte que l'ensemble du lubrifiant coule à travers ledit élément de filtration magnétique.

2. Dispositif selon la revendication 1, **caractérisé en ce que** la grille est conçue sous forme de surface plane.

3. Dispositif selon l'une des revendications 1 à 2,
**caractérisé en ce que**
l'élément de filtration magnétique (1, 1a, 1b) est disposé dans un réservoir de lubrifiant de la transmission.

4. Dispositif selon l'une des revendications 1 à 3,
**caractérisé en ce que**
l'élément de filtration magnétique (1, 1a, 1b) est logé mobile dans le réservoir de lubrifiant de la transmission.

5. Dispositif selon l'une des revendications 1 à 4,
**caractérisé en ce que**
le carter de transmission (8) comprend une ouverture (6), conçue de façon à ce que l'élément de filtration magnétique (1, 1a, 1b) puisse être introduit dans le carter de transmission (8) et/ou extrait du carter de transmission (8) à travers ladite ouverture (6).

6. Dispositif selon l'une des revendications 1 à 5,
**caractérisé en ce que**
l'ouverture (6) comprend un joint d'étanchéité destiné à empêcher une fuite du lubrifiant à travers l'ouverture (6).

7. Dispositif selon l'une des revendications 1 à 6,
**caractérisé en ce que**
le carter de transmission (8) comprend deux ouvertures (6).

8. Dispositif selon l'une des revendications 1 à 7,
**caractérisé en ce que**
l'élément de filtration magnétique (1, 1a, 1b) est disposé dans le flux de lubrifiant en amont de l'élément de filtration fine et peut être échangé indépendamment de celui-ci.

9. Dispositif selon l'une des revendications 1 à 8,
**caractérisé en ce que**
l'élément de filtration magnétique (1, 1a, 1b) peut être échangé pendant le fonctionnement de la transmission (7).

10. Dispositif selon l'une des revendications 1 à 9,
**caractérisé en ce que**
l'élément de filtration magnétique (1, 1a, 1b) est conçu de manière à ce que les impuretés non métalliques adhérant aux impuretés métalliques du lubrifiant sont éliminées en même temps.

11. Dispositif selon l'une des revendications 1 à 10,
**caractérisé en ce que**
la transmission (7) est une transmission de turbine éolienne.

12. Dispositif selon l'une des revendications 1 à 11,
**caractérisé en ce que**
l'élément de filtration magnétique (1, 1a, 1b) est disposé au-dessous des éléments de transmission mobiles.

13. Dispositif selon l'une des revendications 1 à 12,
**caractérisé en ce que**
l'élément de filtration magnétique (1, 1a, 1b) comprend un axe longitudinal, **en ce que** les éléments de transmission mobiles comprennent un arbre ayant un axe longitudinal et **en ce que** l'axe longitudinal de l'élément de filtration magnétique (1, 1a, 1b) est disposé transversalement à l'axe longitudinal de l'arbre.

14. Turbine éolienne dotée d'un dispositif selon l'une des revendications 1 à 13.
